# EUROPEAN PATENT APPLICATION

(11) **EP 4 199 587 A1**
(43) Date of publication of application: **21.06.2023**
(21) Application number: 21863506.8
(22) Date of filing: 17.08.2021
(51) Int. Cl.: H04W 36/00

(54) **NETWORK SLICE DETERMINATION METHOD, COMMUNICATION DEVICE AND SYSTEM, AND STORAGE MEDIUM**

(30) Priority: 02.09.2020 CN 202010911555
(71) Applicant: ZTE Corporation, Shenzhen, Guangdong 518057 (CN)
(72) Inventor: YANG, Haicheng, Shenzhen, Guangdong 518057 (CN)
(74) Representative: Savi, Massimiliano
(86) International application number: PCT/CN2021/113058
(87) International publication number: WO 2022/048439

(57) **Abstract**

A network slice determination method, a communication device and system, and a storage medium. A terminal knows currently available network slices by means of available network slice information obtained from a server, then determines a target network slice from these available network slices, then applies for the target network slice from a core network side, establishes, with the core network side, a session corresponding to the target network slice, and further performs communication on the basis of the target network slice to enjoy a service provided by the target network slice.

## Description

### CROSS-REFERENCE TO RELATED APPLICATION

This application is filed on the basis of Chinese patent application No. 202010911555.7 filed September 2, 2020, and claims priority of the Chinese patent application, the entire contents of which are incorporated herein by reference.

### TECHNICAL FIELD

Embodiments of the present disclosure relate to, but not limited to, the field of communication, and in particular to, but not limited to, a network slice determination method, a communication device and system, and a storage medium.

### BACKGROUND

5G network will face rich differentiated service demands for communications among people and things, and the requirements of these demands for the network vary greatly. Therefore, if different services are loaded on the same infrastructure and network element, the network may not be able to meet the requirements of multiple services at the same time. The network slicing technology divides a physical network into multiple virtual logical networks through virtualization, and each virtual network corresponds to a different application scenario, thereby providing an energy-efficient and easy-to-deploy network solution. Usually, there may be multiple network slices at the same position at the same time, so a terminal device needs to know which network slice or slices it should apply to access when accessing the network. Thus, it is particularly important to determine an appropriate network slice for the terminal device for the communication experience of a user. However, the current mode for selecting a network slice for the terminal device is not ideal, which leads to low user experience.

### SUMMARY

The network slice determination method, communication device and system, and storage medium provided by the embodiments of the present disclosure solve, at least to a certain extent, the technical problem of how to provide a new scheme for determining a network slice for a terminal device to improve the user experience.

In view of the above, an embodiment of the present disclosure provides a network slice determination method. The method includes: obtaining available network slice information of a terminal device from a server, the available network slice information being used to characterize available network slices for the terminal device; determining a target network slice from the available network slices according to the available network slice information; applying for the target network slice to a core network; and establishing a session corresponding to the target network slice with a core network side.

An embodiment of the present disclosure further provides a network slice determination method. The method includes: determining available network slices corresponding to a terminal device; and sending available network slice information characterizing the available network slices for the terminal device to the terminal device, the available network slice information being used for the terminal device to select a target network slice from the available network slices.

An embodiment of the present disclosure further provides a network slice determination method. The method includes: receiving a slice application request sent by a terminal device; determining a target network slice applied for use by the terminal device according to a slice identifier in the slice application request; and establishing a session corresponding to the target network slice with the terminal device.

An embodiment of the present disclosure further provides a communication device. The communication device includes a processor, a memory and a communication bus. The communication bus is configured to implement connection communication between the processor and the memory. The processor is configured to execute one or more programs stored in the memory to implement the first network slice determination method; alternatively, the processor is configured to execute one or more programs stored in the memory to implement the second network slice determination method; alternatively, the processor is configured to execute one or more programs stored in the memory to implement the third network slice determination method.

An embodiment of the present disclosure further provides a communication system. The communication system includes a core network device, a server and multiple terminal devices. Each of the terminal devices is a communication device of which the processor implements the first network slice determination method. The server is a communication device of which the processor implements the second network slice determination method. The core network device is a communication device of which the processor implements the third network slice determination method.

An embodiment of the present disclosure further provides a storage medium, storing at least one of a first network slice determination program, a second network slice determination program or a third network slice determination program. The first network slice determination program, when executed by one or more processors, causes the one or more processors to implement the first network slice determination method. The second network slice determination program, when executed by one or more processors, causes the one or more processors to implement the first network slice determination method. The third network slice determination program, when executed by one or more processors, causes the one or more processors to implement the steps of the first network slice determination method.

Other features and corresponding beneficial effects of the present disclosure are described in the later part of the description, and it should be understood that at least some beneficial effects will become apparent from the description of the present disclosure.

### BRIEF DESCRIPTION OF DRAWINGS

Fig. 1 is a flowchart of a network slice determination method provided in Embodiment one of the present disclosure;
Fig. 2 is a flowchart of determining a target network slice by a terminal device provided in Embodiment one of the present disclosure;
Fig. 3 is a schematic diagram of a first display interface for displaying available network slice information by a terminal device provided in Embodiment one of the present disclosure;
Fig. 4 is a schematic diagram of a second display interface for displaying available network slice information by a terminal device provided in Embodiment one of the present disclosure;
Fig. 5 is a schematic diagram of a third display interface for displaying available network slice information by a terminal device provided in Embodiment one of the present disclosure;
Fig. 6 is a schematic diagram of a fourth display interface for displaying available network slice information by a terminal device provided in Embodiment one of the present disclosure;
Fig. 7 is a schematic diagram of a fifth display interface for displaying available network slice information by a terminal device provided in Embodiment one of the present disclosure;
Fig. 8 is a flowchart of a network slice determination method provided in Embodiment two of the present disclosure;
Fig. 9 is a schematic diagram of a hardware structure of a communication device provided in Embodiment three of the present disclosure; and
Fig. 10 is a schematic diagram of a communication system provided in Embodiment three of the present disclosure.

### DETAILED DESCRIPTION

In order to make the objects, technical schemes and advantages of the present disclosure clear, embodiments of the present disclosure will be further described in detail in combination with specific implementations and drawings. It should be understood that the specific implementations described here are only used to illustrate the present disclosure, and are not intended to limit the present disclosure.

### Embodiment one

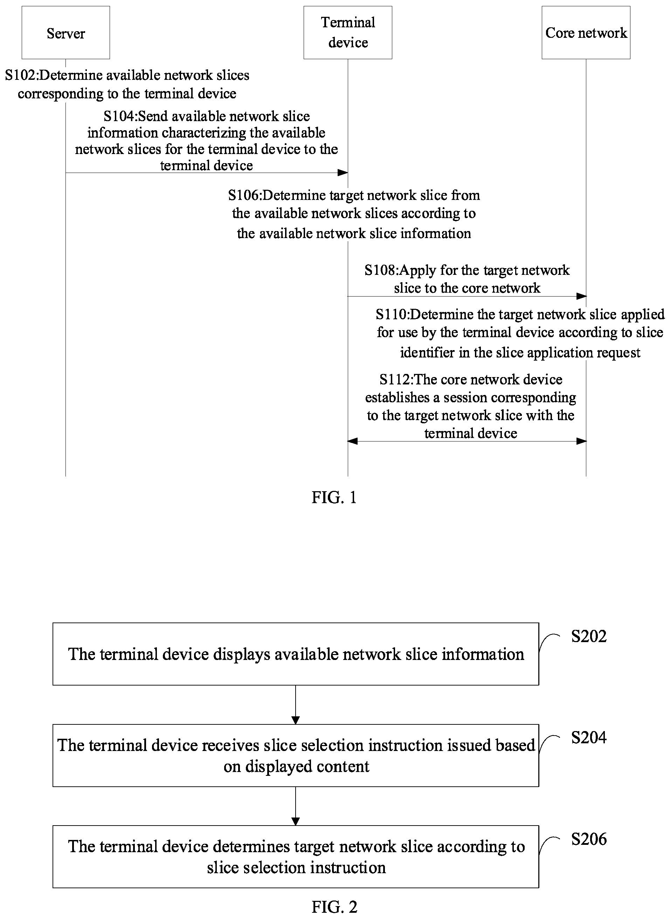

In some cases in this field, a network side determines which network slice or slices a terminal device accesses according to the communication quality of the terminal device in each network slice. However, this can only ensure the communication quality of the terminal device, but cannot really meet the communication requirements of the terminal device, thereby limiting the communication experience of a user at a terminal device side. In order to solve this problem, this embodiment provides a network slice determination method, which is implemented through cooperation of a terminal device, a server and a core network. Reference is now made to an interactive flowchart of the network slice determination method shown in Fig. 1 below. The method includes following steps.

At S 102, a server determines available network slices corresponding to a terminal device.

In some examples of this embodiment, the available network slices may refer to network slices that the terminal device can utilize immediately and directly. In this case, after obtaining available network slice information from the server, the terminal device can directly apply for a certain available network slice to the core network to enjoy a service provided by a corresponding network slice.

In other examples of this embodiment, the available network slices include not only network slices that the terminal device can utilize immediately and directly, but also network slices that the terminal device can utilize after some operations. For example, in some examples of this embodiment, the available network slices include network slices deployed at a current position of the terminal device, but the terminal device may have not subscribed to and purchased all these network slices, so the terminal device may not be able to directly utilize a certain available network slice at present. However, after completing a corresponding subscription purchase operation, the terminal device can utilize the available network slice. For another example, in other examples, the available network slices include all network slices that the user has subscribed to and purchased, but these network slices are deployed at different positions, so at the current position of the terminal device, the terminal device cannot utilize some of the network slices. However, if the terminal device moves into a position that is located in the coverage area of these network slices, the terminal device can utilize these network slices.

In some examples of this embodiment, the server may determine available network slices for the terminal device based on the current position of the terminal device. In these examples, when the terminal device sends a slice query request to the server, information capable of characterizing the current position of the terminal device is carried in the slice query request. In some examples, the slice query request may carry current specific position information or precise positioning information of the terminal device, for example, GPS positioning information of the terminal device. In other examples, the slice query request may carry information capable of roughly indicating the current position of the terminal device, for example, a cell identifier of a current serving cell of the terminal device, etc.

In other examples of this embodiment, the server may determine available network slices for the terminal device based on subscription information of a terminal device user.

In still other examples, the server may determine available network slices for the terminal device in conjunction with the current position of the terminal device and the subscription information of the terminal device user. For example, the server first, based on the current position of the terminal device, screens available network slices deployed at the position. Then, the server further screens out network slices that the terminal device user has not subscribed to by taking into consideration the subscription information of the terminal device user, and then takes the remaining available network slices as final available network slices. Of course, in other examples of this embodiment, the server may first screen available network slices according to the subscription information of the terminal device user, and then further screen the available network slices according to the current position of the terminal device.

In some cases, when determining available network slices according to at least one of the current position of the terminal device or the subscription information of the user, the server may further screen the available network slices by taking into consideration other information. For example, in an example of this embodiment, when screening available network slices for the terminal device, the server may only screen network slices that the terminal device user has subscribed to and purchased in the network where the terminal device currently resides. In another example of this embodiment, the server may screen network slices according to the current position of the terminal device in conjunction with a network identifier specified by the terminal device side. For example, the terminal device may designate the server to screen out all the network slices deployed by CMCC at a position Y as available network slices.

In some examples of this embodiment, prior to sending the slice query request to the server, the terminal device first searches for networks covering the current position of the terminal device according to a target standard, and determines all the networks of the target standard at the current position of the terminal device. For example, the terminal device takes 5G as the target standard, and then searches for all 5G networks at the current position of the terminal device. For example, at a certain position, there are a first 5G network deployed by Operator A and a second 5G network deployed by Operator B. For the terminal device, after finding a synchronization signal, the terminal device parses a system parameter carried in the synchronization signal, such as a Public Land Mobile Network (PLMN), to determine which operator's network it is. In this case, the terminal device may select whether to use the first 5G network or the second 5G network. If the terminal device selects to use the first 5G network, the first 5G network is a current target network of the terminal device, so a network identifier and position information of the first 5G network are carried in the slice query request and sent to the server.

In the above examples, the server determines corresponding available network slices for the terminal device according to the request of the terminal device. In other examples of this embodiment, the server may also actively determine corresponding available network slices for the terminal device without receiving a request from the terminal device side. For example, the server can determine available network slices for each terminal device regularly or irregularly.

The server in this embodiment includes, but not limited to, at least one of a local server, a third-party server, a slice mall, an Access and Mobility Management Function (AMF) network element, etc.

At S104, the server sends available network slice information characterizing the available network slices for the terminal device to the terminal device.

The available network information sent by the server to the terminal device should at least include slice identifiers of the available network slices. In some examples of this embodiment, available network slice information corresponding to one available network slice may further include at least one of the following information: subscription purchase information (configured to characterize whether a user has subscribed to and purchased the available network slices), home operator information (configured to characterize an operator to which the available network slice belongs), applicable service type, charging method, Quality of Service (QOS) indicator information, and Data Network Name (DNN) information.

It can be understood that the available network slice information is not limited to the above information. For example, in an example of this embodiment, the available network slice information further includes information about whether the available network slice is being used (configured to characterize whether the terminal device is using the available network slice) and/or consumed traffic (characterizing traffic consumed by the terminal device using the available network slice in the past).

In an example of this embodiment, the network slices that the user has subscribed to and purchased may be deployed at different positions, that is, the available network slices determined by the server for the terminal device may not be available to the terminal device at present. In this case, the server may also provide the position of each available network slice to the terminal device, such that the terminal device can select the target network slice from the available network slices according to its position.

At S106, the terminal device determines a target network slice from the available network slices according to the available network slice information.

After receiving the available network slice information sent by the server, the terminal device can select a network slice that it intends to access from these available network slices according to the available network slice information, and the selected network slice is the current target network slice of the terminal device.

In some examples of this embodiment, the terminal device may select a target network slice without the participation of the user. For example, in an example of this embodiment, after the user starts a certain Application (APP), the terminal device selects a target network slice for carrying a service for the APP, and then the terminal device can select from the available network slices a network slice of which the applicable service type matches the type of the APP. For another example, in an example of this embodiment, the terminal device may collect historical slice usage habits of the user, and then select an available network slice that conforms to the usage habits of the user as the target network slice.

In other examples of this embodiment, the terminal device may select a target network slice according to an instruction of the user. For example, the user may issue a slice selection instruction to the terminal device through touchscreen operation, voice input, etc. The terminal device determines the target network slice according to the slice selection instruction. For example, the terminal device may also present the available network slice information to the user, and then determine the target network slice according to the selection of the user. For example, in an example of this embodiment, the terminal device may determine the target network slice according to the flow shown in Fig 2, which includes following operations.

At S202, the terminal device displays the available network slice information.

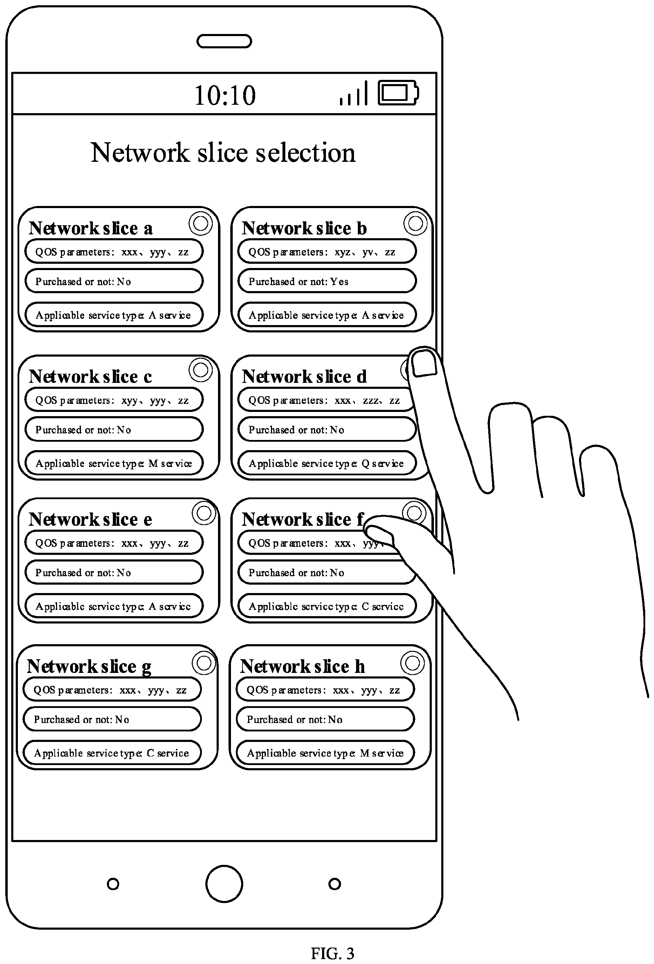

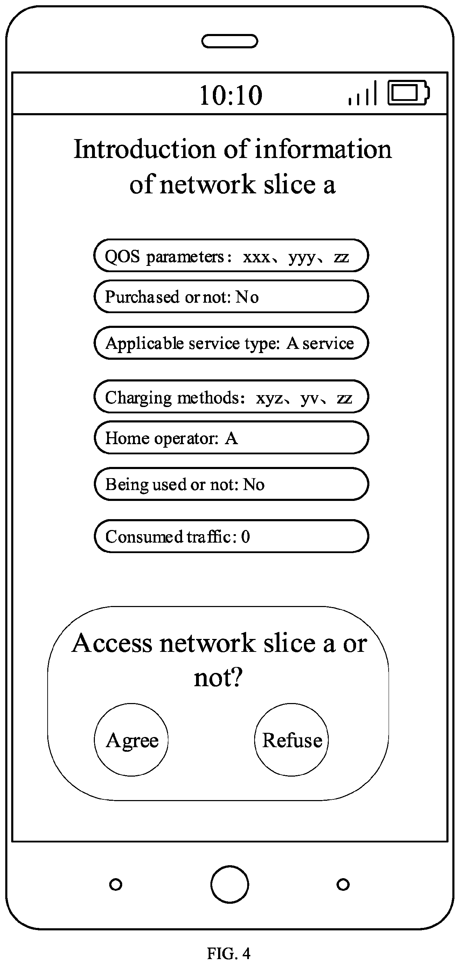

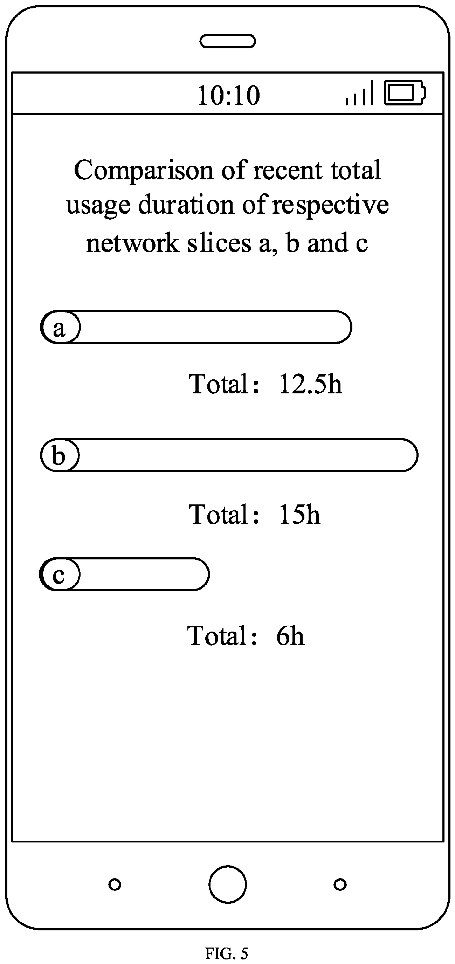

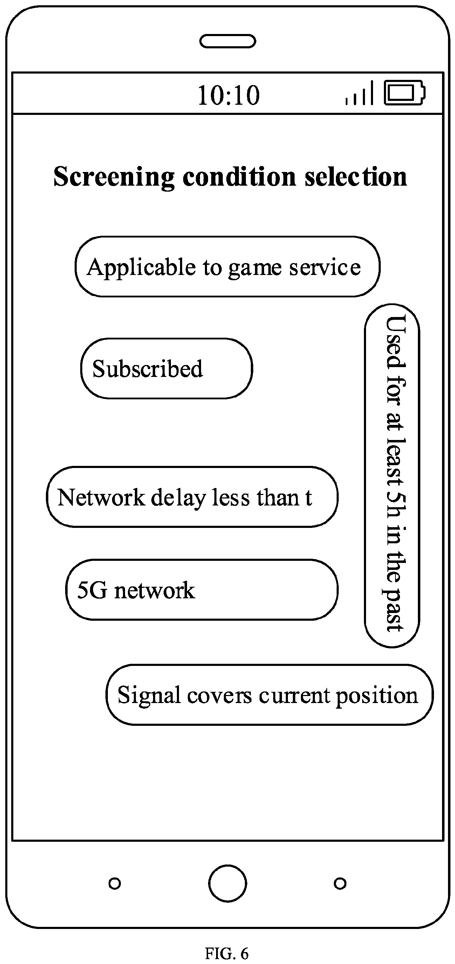

After obtaining the available network slice information, the terminal device displays the available network slice information. In some examples of this embodiment, the terminal device may display the network slice information of all available network slices to the user together, as shown in Fig. 3. When there are many available network slices, or there is much network slice information corresponding to a single available network slice, the terminal device may display the network slice information corresponding to each available network slice on an independent page, as shown in Fig. 4. In other examples, in order to facilitate the user to quickly select the target network slice from multiple available network slices, in some examples of this embodiment, the terminal device may also display comparison results of multiple available network slices under the identical available network slice information on the same display page, for example, display QOS comparison results of all available network slices on one page. For another example, a total usage duration of each of three available network slices by the terminal device in a past week is displayed on one page, as shown in Fig. 5. In still other examples, the terminal device may provide the user with screening entries for the user to select, as shown in Fig. 6. After the user selects one or more screening entries, the terminal device can screen the available network slices according to the screening entries and then present qualified available network slices to the user, thereby simplifying the user selection process and improving the friendliness of human-computer interaction. In still other examples, the terminal device may determine one or more recommended network slices from the available network slices and then especially prompt the user with the recommended network slice when displaying the available network slice information. Because the recommended network slice provided by the terminal device is usually a network slice conforming to the usage habits of the user or is currently in an excellent network state, the user can easily select the target network slice by taking into consideration the recommended network slice provided by the terminal device.

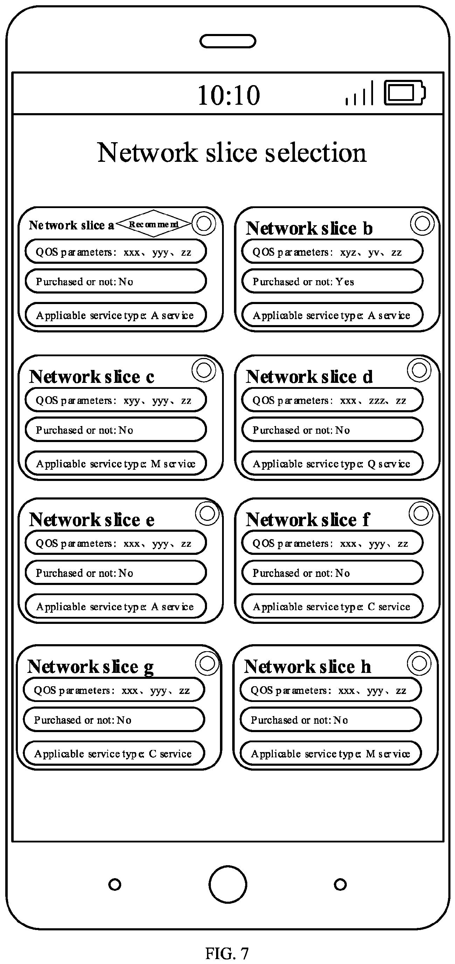

In some examples of this embodiment, the terminal device can determine a commonly-used service type based on a frequency of utilizing various services by the terminal device in a past period of time. For example, the terminal device determines that a commonly-used service in a past week is a game service based on the statistics of historical usage data of the user. Subsequently, the terminal device can determine a network slice corresponding to the game service as a recommended network slice which is a network slice recommended by terminal device for user, for example, a network slice suitable for carrying the game service of the available network slices. Then, when the available network slice information is displayed, the network slice information corresponding to the recommended network slice is identified by means of a recommendation identifier. For example, in Fig. 7, when the terminal device displays the network slice information corresponding to multiple available network slices, a word "recommended" is noted after the network slice d to inform the user that the network slice d is a recommended network slice. Of course, those having ordinary skills in the art can understand that the function of the recommendation identifier is to highlight the network slice information of the recommended network slice from the network slice information of all available network slices. Therefore, the recommendation identifier may not be necessarily "recommended" or a similar word, but may be a graphic (such as a star graphic), a background color different from that of other available network slice information, and the like.

In other examples of this embodiment, the terminal device may also determine the recommended network slice by taking into consideration a usage duration of each available network slice by the terminal device in a past period of time. For example, in the last week, for four network slices a, b, c and d, if the total usage duration of the terminal device is 1.3 days, 0.8 days, 0.3 days and 1.5 days, respectively, the terminal device may select to use the network slice d with the longest total duration as the recommended network slice. In addition, the terminal device may also determine the recommended network slice according to the frequency of utilizing each available network slice by the terminal device or the number of times the user actively selects each network slice.

At S204, the terminal device receives a slice selection instruction issued based on displayed content.

When the user selects a certain available network slice as the target network slice, the terminal device will receive a slice selection instruction. For example, for a touchscreen terminal device, a touch operation for the user to select an available network slice is equivalent to the slice selection instruction issued by the user. Of course, in some other examples of this embodiment, the slice selection instruction may also be a voice instruction sent by the user to the terminal device. If the user says "access network slice c" to a voice acquisition apparatus of the terminal device, the voice instruction is the slice selection instruction received by the terminal device.

At S206, the terminal device determines the target network slice according to the slice selection instruction.

After receiving the slice selection instruction, the terminal device parses the slice selection instruction to determine which target network slice is selected by the user.

At S108, the terminal device applies for the target network slice to the core network.

After determining the target network slice, the terminal device can apply for the target network slice to the core network. The terminal device may send a slice application request to the core network. The slice application request includes information capable of uniquely identifying one network slice, for example, a slice identifier. In an example of this embodiment, the terminal device queries a UE Route Selection Policy (URSP) rule list according to a DNN of the target network slice to determine Single Network Slice Selection Assistance Information (S-NSSAI) corresponding to the target network slice, and then the terminal device sends the slice application request carrying the S-NSSAI of the target network slice to the core network.

At S 110, a core network device determines the target network slice applied for use by the terminal device according to a slice identifier in the slice application request.

After receiving the slice application request sent by the terminal device, the core network extracts the slice identifier from the slice application request, and determines which target network slice the terminal device applies for according to the slice identifier. For example, in some examples, the core network extracts the S-NSSAI from the slice application request, and determines the corresponding target network slice according to the S-NSSAI.

At S 112, the core network device establishes a session corresponding to the target network slice with the terminal device.

It can be understood that the purpose that the terminal device applies for a network slice to the core network is actually to establish a PDU session corresponding to the network slice with the network side, so as to implement service transmission in subsequent processes based on the PDU session. Therefore, the slice application request sent by the terminal device to the core network may actually be regarded as a PDU session creation request. After determining the target network slice according to the slice application request, the core network establishes a PDU session corresponding to the target network slice with the terminal device.

Of course, the terminal device may also configure corresponding network ports and related routes for the PDU session of the target network slice.

In the network slice determination method provided by this embodiment, a terminal device side determines a target network slice to be accessed by the terminal device side itself. Compared with the method of determining a target network slice by a network side in some cases in this field, the scheme of this embodiment provides the terminal device side with greater autonomy, which is advantageous for the terminal device to select a more suitable network slice. Moreover, in this embodiment, the terminal device may also present the available network slice information to the user, so that the user can know which network slices the terminal device can access and the user can select a target network slice by himself/herself. In this way, the target network slice selected by the user can be more suitable for service demands, which is conductive to improving the user experience.

In addition, the terminal device may also highlight the recommended network slice using the recommendation identifier when displaying the available network slice information to the user, which can help the user to select the target network slice, avoid the situation where the user does not know how to select from multiple available network slices, reduce the user selection burden and optimize the user experience.

### Embodiment two

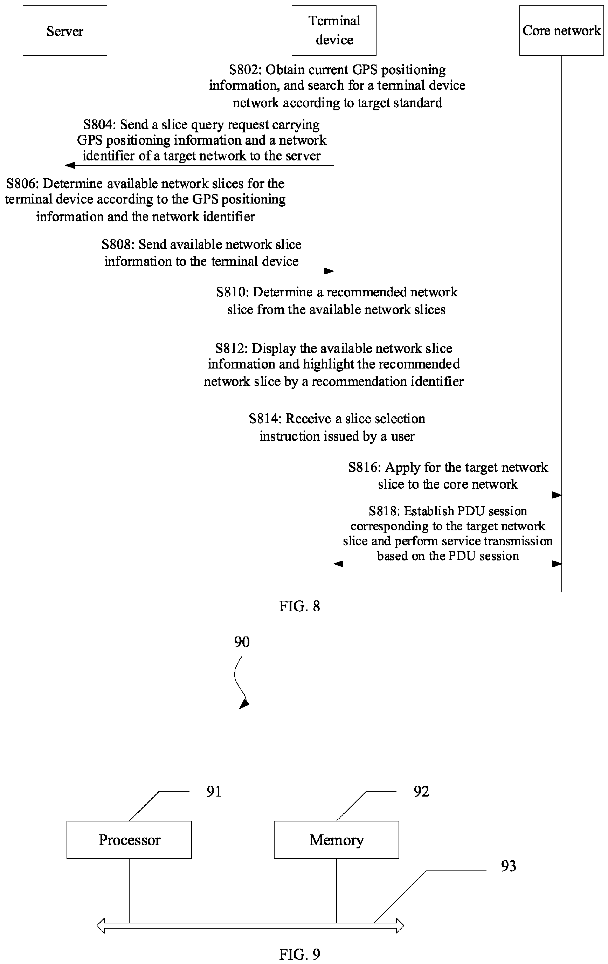

In order to make the advantages and details of the aforementioned network slice determination method clear to those having ordinary skills in the art, this embodiment will further elaborate the scheme by way of examples. Reference may be made to an interactive flowchart shown in Fig. 8, which includes following steps.

At S802, the terminal device obtains current GPS positioning information, and searches for a terminal device network according to a target standard.

In this embodiment, the terminal device may obtain its own current position through GPS positioning. However, in other examples of this embodiment, the terminal device may also obtain its current position through base station positioning. Alternatively, the terminal device may directly obtain a cell identifier of its current serving cell without fine positioning, to roughly reflect its current position by the coverage of the serving cell.

In addition, the terminal device may also search for a network according to a target instruction to determine the network coverage at its position. For example, in an example of this embodiment, the terminal device finds 5G networks provided by three operators at one position simultaneously, so that the terminal device can obtain network identifiers of these three networks.

At S804, the terminal device sends a slice query request carrying GPS positioning information and a network identifier of a target network to the server.

The terminal device may generate a slice query request carrying GPS positioning information and a network identifier of a network to which the available network slice that the terminal device requests the server to query belongs, that is, a network identifier of a target network.

It can be understood that there may be multiple network identifiers carried in the slice query request, that is, the terminal device may simultaneously request the server to query network slices of multiple target networks at its position. For example, in the aforementioned example, the terminal device finds three different 5G networks provided by three operators, so the terminal device may take all the three 5G networks as target networks.

At S806, the server determines available network slices for the terminal device according to the GPS positioning information and the network identifier.

The server can determine all the network slices at a corresponding position according to the GPS positioning information, and then screen out the available network slices for the terminal device using the network identifier. In this embodiment, when screening the available network slices, the server does not need to pay attention to the subscription and the purchase of the network slices by the user, because even if the user does not currently subscribe to a certain network slice, if the user wants to utilize the network slice, he/she may temporarily subscribe to and purchase the network slice to obtain a right to utilize the network slice.

At S808, the server sends available network slice information to the terminal device.

After determining the available network slices, the server may send available network slice information corresponding to the available network slices to the terminal device.

At S810, the terminal device determines a recommended network slice from the available network slices.

After receiving the available network slice information sent by the server, the terminal device can determine which available network slices are selected by the server according to the available network slice information. In addition, the terminal device can determine the recommended network slice based on service usage habits of the user. In some examples, when determining the recommended network slice, the terminal device may consider at least one of the frequency, number of times and cumulative duration of each of various services performed by the user in a past period of time, determine a commonly-used service type of the user in the past period of time based on such information, and then determine a corresponding recommended network slice based on the commonly-used service type. In other examples of this embodiment, the terminal device may also determine the recommended network slice according to factors such as network quality, charging method, etc. For example, the terminal device may comprehensively consider the degree of excellence of QOS indicators of all network slices and the affordability of the charging method, and then select an available network slice with higher cost performance as the recommended network slice.

At S812, the terminal device displays the available network slice information and highlights the recommended network slice by a recommendation identifier.

In an example of this embodiment, the available network slice information displayed by the terminal device to the user includes at least one of subscription and purchase information, home operator information, an applicable service type, a charging method, QOS indicator information, DNN information, information about whether the available network slice is being used, or consumed traffic.

In addition, in this embodiment, the terminal device may also display a recommendation identifier in the network slice information corresponding to the recommended network slice, and highlight the network slice information corresponding to the recommended network slice by the recommendation identifier.

At S814, the terminal device receives a slice selection instruction issued by the user.

In this embodiment, the terminal device is a touchscreen terminal device. Thus, the user can directly perform a touch operation on a touchscreen of the terminal device to indicate the selected target network slice to the terminal device. After the terminal device detects a qualified touch operation, which is equivalent to detecting a slice selection instruction, the terminal device parses the touch operation of the user, which is actually a process of parsing the slice selection instruction. By parsing the slice selection instruction, the terminal device can determine the target network slice selected by the user.

At S816, the terminal device sends a slice application request to the core network.

After determining the target network slice that the user intends to access, the terminal device may send a slice application request carrying a slice identifier of the target network slice to the core network.

It can be understood that in some cases, the operator of the network to which the target network slice belongs may not be the operator of the network where the terminal device currently resides. For example, the terminal device may currently reside in a second network of operator B, while the target network slice belongs to a third network of operator C. In this case, prior to applying for the target network slice to the core network, the terminal device may also ensure that the terminal device itself accesses the network to which the target network slice belongs.

At S818, the terminal device establishes a PDU session corresponding to the target network slice with the network side and performs service transmission based on the PDU session.

After receiving the slice application request sent by the terminal device, the core network can determine a target network slice selected by the terminal device according to the slice identifier carried in the slice application request, and then establish a PDU session corresponding to the target network slice. In addition, the terminal device configures network ports and routes corresponding to the target network slice. Subsequently, the terminal device performs service transmission with the network side based on the established PDU session, so that the user of the terminal device can enjoy a communication service provided by the target network slice.

In the network slice determination method provided by this embodiment, after obtaining the available network slices at its current position from the server, the terminal device presents the available network slice information to the user, and highlights the recommended network slice by the recommendation identifier, so that the user can select the target network slice by himself/herself, which ensures that the selected network slice meets the service demands of the terminal device and enhances the user experience.

### Embodiment three

This embodiment provides a storage medium. The storage medium includes volatile and nonvolatile, removable and non-removable media implemented in any method or technology for storing information such as computer-readable instructions, data structures, computer program modules or other data. The storage medium includes, but not limited to, Random Access Memory (RAM), Read-Only Memory (ROM), Electrically Erasable Programmable Read-Only Memory (EEPROM), flash memory or other memory technologies, Compact Disc Read-Only Memory (CD-ROM), Digital Video Disk (DVD) or other CD memories, magnetic cassettes, magnetic tapes, disk memories or other magnetic storage devices or any other medium that may be used to store desired information and may be accessed by a computer.

The storage medium may store one or more computer programs that can be read, compiled and executed by one or more processors. In this embodiment, the storage medium may store at least one of a first network slice determination program, a second network slice determination program, or a third network slice determination program. The first network slice determination program, when executed by one or more processors, causes the one or more processors to implement the flow at the terminal device side in any of the network slice determination methods introduced in the preceding embodiments. The second network slice determination program, when executed by one or more processors, causes the one or more processors to implement the flow at the server side in any of the network slice determination methods introduced in the preceding embodiments. The third network slice determination program, when executed by one or more processors, causes the one or more processors to implement the flow at the core network side in any of the network slice determination methods introduced in the preceding embodiments.

This embodiment further provides a computer program product. The computer program product includes a computer-readable device, storing the computer programs as described above. The computer-readable device in this embodiment may include the computer-readable storage medium as shown above. For example, the computer program product includes a communication device 90, as shown in Fig. 9. The communication device 90 includes a processor 91, a memory 92 and a communication bus 93 for connecting the processor 91 and the memory 92. The memory 92 may be the aforementioned storage medium storing at least one of a first terminal device communication control program, or a second terminal device communication control program.

For example, in an example of this embodiment, the communication device 90 is a terminal device, and the processor 91 of the communication device can read, compile and execute the first network slice determination program, to implement the flow of the network slice determination method at the terminal device side introduced in the preceding embodiment.

The processor 91 obtains available network slice information of the terminal device from a server, the available network slice information being configured to characterize available network slices for the terminal device. Then, the processor 91 determines a target network slice from the available network slices according to the available network slice information, and applies for the target network slice to a core network. Subsequently, the processor 91 establishes a session corresponding to the target network slice with a core network side.

In some examples of this embodiment, when obtaining the available network slice information of the terminal device from the server, the processor 91 may first send a slice query request to the server, the slice query request including information characterizing a current position of the terminal device. Then, the processor 91 receives available network slice information sent by the server according to the slice query request, the available network slice information including network slice information of available network slices for the terminal device at the current position.

In some examples of this embodiment, prior to sending a slice query request to the server, the processor 91 may search for a network covering the current position of the terminal device according to a target standard. When sending a slice query request to the server, the processor 91 sends to the server a slice query request carrying a network identifier of a target network, which is at least one found network, and the slice query request is configured to request a query for the available network slices in the target network when the terminal device is in the current position.

In some examples of this embodiment, when determining the target network slice from the available network slices according to the available network slice information, the processor 91 may display the available network slice information, then receive a slice selection instruction issued based on the displayed content, and determine the target network slice according to the slice selection instruction, where the slice selection instruction is configured to indicate the target network slice in the available network slices.

In some examples of this embodiment, prior to displaying the available network slice information, the processor 91 determines a commonly-used service type based on a frequency of utilizing services by the terminal device, and then take a network slice corresponding to the commonly-used service type as a recommended network slice. When displaying the available network slice information, the processor 91 may identify the network slice information corresponding to the recommended network slice using a recommendation identifier.

For details about the processor 91 executing the first network slice determination program to implement the network slice determination flow at the terminal device side, please see the introduction of the embodiments described above, which will not be repeated here.

In an example of this embodiment, the communication device 90 is a server, and the processor 91 of the communication device can read, compile and execute the second network slice determination program, to implement the flow of the network slice determination method at the server side introduced in the embodiments described above.

The processor 91 determines available network slices corresponding to a terminal device, and then sends available network slice information characterizing the available network slices for the terminal device to the terminal device, the available network slice information being configured for the terminal device to select a target network slice from the available network slices.

In some examples, when determining the available network slices corresponding to the terminal device, the processor 91 may first receive a slice query request sent by the terminal device, the slice query request including information characterizing a current position of the terminal device. Then, the processor 91 queries available network slices corresponding to the terminal device at the current position according to the information characterizing the current position of the terminal device.

For details about the processor 91 executing the second network slice determination program to implement the network slice determination flow at the server side, please see the introduction of the embodiments described above, which will not be repeated here.

In still other examples, the communication device 90 is a core network device, and the processor 91 of the communication device can read, compile and execute the third network slice determination program, to implement the flow of the network slice determination method at the core network side introduced in the embodiments described above.

The processor 91 receives a slice application request sent by the terminal device, then determines a target network slice applied for use by the terminal device according to a slice identifier in the slice application request, and establishes a session corresponding to the target network slice with the terminal device.

For details about the processor 91 executing the third network slice determination program to implement the network slice determination flow at the core network side, please see the introduction of the embodiments described above, which will not be repeated here.

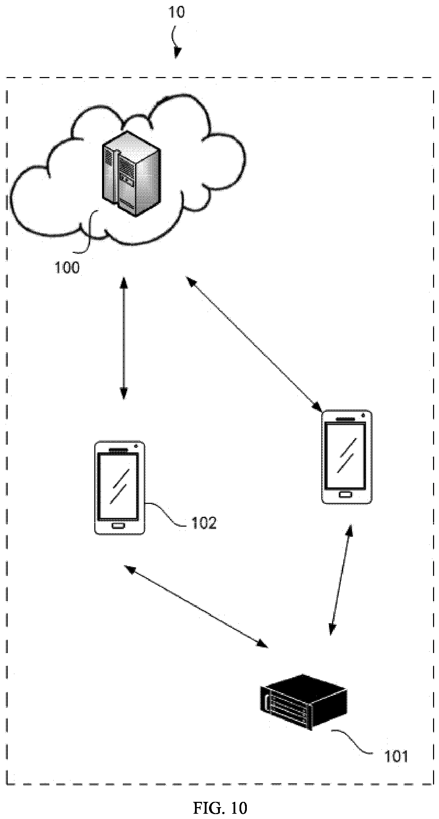

This embodiment further provides a communication system 10. The communication system 10 includes a core network device 100, a server 101 and multiple terminal devices 102, as shown in Fig. 10. The core network device 100 may be the communication device 90 of which the processor 91 executes the third network slice determination program, the server 101 may be the communication device 90 of which the processor 91 executes the second network slice determination program, and the terminal device 102 may be the communication device 90 of which the processor 91 executes the first network slice determination program.

According to the network slice determination method, communication device and system, and storage medium provided by the embodiments of the present disclosure, a terminal device learns current available network slices for the terminal device itself through available network slice information obtained from a server, determines a target network slice from these available network slices, applies for the target network slice to a core network side, establishes a session corresponding to the target network slice with the core network side, and performs communication on the basis of the target network slice to enjoy a service provided by the target network slice. Therefore, in the embodiments of the present disclosure, which network slice the terminal device finally accesses is decided by the terminal device side, and the terminal device side has a decision right on the target network slice. Meanwhile, because the terminal device side can be more aware of its own or user's communication demands, the target network slice selected by the terminal device side is more conducive to meeting the user's communication demands, thereby improving the user experience.

Therefore, it should be understood by those having ordinary skills in the art that all or some of the steps in the methods, functional modules/units in the systems and the devices disclosed above may be implemented as software (which may be implemented by a computer program code executable by a computing device), firmware, hardware and appropriate combinations thereof. In the hardware implementation, the division between functional modules/units mentioned in the above description does not necessarily correspond to the division of physical components. For example, a physical component may have multiple functions, or a function or step may be cooperatively performed by multiple physical components. Some or all of the physical components may be implemented as software executed by a processor, such as a central processing unit, a digital signal processor or a microprocessor, or as hardware, or as an integrated circuit, such as an application specific integrated circuit.

In addition, it is well known to those having ordinary skills in the art that the communication medium may generally include computer-readable instructions, data structures, computer program modules or other data in a modulated data signal such as a carrier wave or other transmission mechanism, and may include any information delivery medium. Thus, the present disclosure is not limited to any particular combination of hardware and software.

The above is a further detailed description of the embodiments of the present disclosure made in conjunction with the specific implementations, and the specific implementations of the present disclosure are not limited to these descriptions. For those having ordinary skills in the art to which the present disclosure belongs, simple deductions or substitutions can be made without departing from the concept of the present disclosure, all of which should be regarded as belonging to the protection scope of the present disclosure.

## Claims

1. A network slice determination method, comprising:
obtaining available network slice information of a terminal device from a server, the available network slice information being configured to characterize available network slices for the terminal device;
determining a target network slice from the available network slices according to the available network slice information;
applying for the target network slice to a core network; and
establishing a session corresponding to the target network slice with a core network side.

2. The network slice determination method of claim 1, wherein obtaining available network slice information of a terminal device from a server comprises:
sending a slice query request to the server; and
receiving the available network slice information sent by the server according to the slice query request.

3. The network slice determination method of claim 2, wherein the slice query request comprises information characterizing a current position of the terminal device; and the available network slice information comprises network slice information of available network slices for the terminal device at the current position.

4. The network slice determination method of claim 2, wherein prior to sending a slice query request to the server, the method further comprises:
searching for a network covering the current position of the terminal device according to a target standard; and
wherein sending a slice query request to the server comprises:
sending the slice query request carrying a network identifier to the server, wherein the network identifier is a network identifier of a target network which is at least one found network, and the slice query request is configured to request a query for available network slices for the terminal device in the target network at the current position.

5. The network slice determination method of any one of claims 1 to 4, wherein determining a target network slice from the available network slices according to the available network slice information comprises:
receiving an input slice selection instruction configured to indicate the target network slice in the available network slices; and
determining the target network slice according to the slice selection instruction.

6. The network slice determination method of claim 5, wherein receiving an input slice selection instruction comprises:
displaying the available network slice information; and
receiving a slice selection instruction issued based on displayed content.

7. The network slice determination method of claim 6, wherein prior to displaying the available network slice information, the method further comprises:
determining a recommended network slice; and
wherein displaying the available network slice information comprises:
in response to the available network slice information being displayed, identifying network slice information corresponding to the recommended network slice by a recommendation identifier.

8. The network slice determination method of claim 7, wherein determining a recommended network slice comprises any one of following modes:
mode one:
determining a commonly-used service type based on at least one of a frequency and a usage duration of a service by the terminal device; and
identifying a network slice corresponding to the commonly-used service type as a recommended network slice; or
mode two:
determining a recommended network slice based on a usage duration of each network slice by the terminal device.

9. A network slice determination method, comprising:
determining available network slices corresponding to a terminal device; and
sending available network slice information characterizing the available network slices for the terminal device to the terminal device, the available network slice information being configured for the terminal device to select a target network slice from the available network slices.

10. The network slice determination method of claim 9, wherein determining available network slices corresponding to a terminal device comprises:
receiving a slice query request sent by the terminal device; and
determining available network slices corresponding to the terminal device according to the slice query request.

11. The network slice determination method of claim 10, wherein the slice query request comprises information characterizing a current position of the terminal device; and determining available network slices corresponding to the terminal device according to the slice query request comprises:
querying available network slices corresponding to the terminal device at the current position according to the information characterizing the current position of the terminal device.

12. A network slice determination method, comprising:
receiving a slicing application request sent by a terminal device;
determining a target network slice applied for use by the terminal device according to a slice identifier in the slice application request; and
establishing a session corresponding to the target network slice with the terminal device.

13. A communication device, comprising a processor, a memory and a communication bus, wherein:
the communication bus is configured to implement connection communication between the processor and the memory; and
the processor is configured to execute one or more programs stored in the memory to perform the network slice determination method of any one of claims 1 to 8; or, the processor is configured to execute one or more programs stored in the memory to perform the network slice determination method of any one of claims 9 to 11; or, the processor is configured to execute one or more programs stored in the memory to perform the network slice determination method of claim 12.

14. A communication system, comprising a core network device, a server and multiple terminal devices, wherein each of the terminal devices is a communication device of which the processor of claim 13 performs the network slice determination method of any one of claims 1 to 8, the server is a communication device of which the processor of claim 13 performs the network slice determination method of claim 12, and the core network device is a communication device of which the processor of claim 13 performs the network slice determination method of any one of claims 9 to 11.

15. A storage medium, storing at least one of a first network slice determination program, a second network slice determination program and a third network slice determination program, wherein the first network slice determination program, when executed by one or more processors, causes the one or more processors to perform the network slice determination method of any one of claims 1 to 8; the second network slice determination program, when executed by one or more processors, causes the one or more processors to perform the network slice determination method of any one of claims 9 to 11; and the third network slice determination program, when executed by one or more processors, causes the one or more processors to perform the network slice determination method of claim 12.
